# EUROPÄISCHE PATENTSCHRIFT

(11) **EP 2 755 884 B1**
(45) Veröffentlichungstag und Bekanntmachung des Hinweises auf die Patenterteilung: **14.09.2016**
(21) Anmeldenummer: 12745802.4
(22) Anmeldetag: 18.07.2012
(51) Int. Cl.: B62D 15/02

(54) **VERFAHREN ZUM UNTERSTÜTZEN EINES AUTOMATISCHEN EINPARKVORGANGS EINES EINPARKHILFESYSTEMS EINES FAHRZEUGS SOWIE EIN ENTSPRECHENDES FAHRZEUG**
METHOD FOR SUPPORTING AN AUTOMATIC PARKING PROCESS OF A PARKING ASSISTANCE SYSTEM OF A VEHICLE, AND CORRESPONDING VEHICLE
PROCÉDÉ D'ASSISTANCE D'UNE MANOEUVRE DE STATIONNEMENT AUTOMATIQUE D'UN SYSTÈME D'AIDE AU STATIONNEMENT D'UN VÉHICULE ET VÉHICULE CORRESPONDANT

(30) Priorität: 16.09.2011 DE 102011082826
(43) Veröffentlichungstag der Anmeldung: 23.07.2014
(73) Patentinhaber: Robert Bosch GmbH, 70442 Stuttgart (DE)
(72) Erfinder: PAMPUS, Christian, 71229 Leonberg (DE); SCHNEIDER, Marcus, 71642 Ludwigsburg (DE); NIEMZ, Volker, 71277 Rutesheim (DE)
(86) Internationale Anmeldenummer: PCT/EP2012/064097
(87) Internationale Veröffentlichungsnummer: WO 2013/037546

(56) Entgegenhaltungen:
- EP-A1- 2 060 465
- EP-A1- 2 116 425
- DE-A1-102005 037 468
- DE-A1-102009 024 083
- DE-A1-102009 027 650

## Beschreibung

Die vorliegende Erfindung betrifft ein Verfahren zum Unterstützen eines automatischen Einparkvorgangs eines Einparkhilfesystems eines Fahrzeugs. Weiterer Gegenstand der vorliegenden Erfindung ist ein Fahrzeug, aufweisend ein Fahrassistenzsystem mit einer Regeleinheit zur Ausführung eines erfindungsgemäßen Verfahrens sowie ein derartiges Fahrassistenzsystem.

### STAND DER TECHNIK

Es sind bereits Verfahren bekannt, die automatische Einparkvorgänge für Fahrzeuge beschreiben. Dabei ist zu unterscheiden, welche Art der Parklücke vorliegt, in welche das Fahrzeug eingeparkt werden soll. Es gibt grundsätzlich im Wesentlichen zwei Arten von Parklücken. Zum einen sind sogenannte Längsparklücken bekannt, in welcher das Fahrzeug nach dem Einparken derart orientiert ist, dass es sich im Wesentlichen parallel zur Fahrtrichtung der Fahrbahn neben dieser Parklücke befindet. Demgegenüber sind Querparklücken bekannt, in welcher sich das Fahrzeug im geparkten Zustand in einer Ausrichtung im Wesentlichen quer zur Fahrtrichtung der benachbarten Fahrbahn befindet. Beim Einparken in eine Querparklücke muss das Auto also hinsichtlich seiner eigentlichen Fahrtrichtung um ca. 90° versetzt werden. Solche Verfahren sind zum Beispiel aus der DE 10 2006 052 575 A1 oder der DE 10 2009 039 691 A1 bekannt. Dort sind Verfahren offenbart, welche ein autonomes Einparken eines Fahrzeugs unterstützen oder automatisch durchführen.

Die DE 10 2005 037 468 A1 offenbart ein Verfahren zum Unterstützen eines Einparkvorgangs eines Fahrzeugs in eine Parklücke. Dabei sind verschiedene Schritte umfasst, unter anderem das Erfassen eines Sensorsignals mit Hilfe mindestens eines Sensors im Fahrzeug zur Ermittlung von Freiräumen oder zur Ermittlung von Hindernissen. Nach dem Ermitteln werden Einparkgrenzen entlang der Parklücke gesetzt.

Bei bekannten Einparkverfahren, die insbesondere automatisch von einem Parkhilfesystem durchgeführt werden, ist es bereits bekannt, dass diese im Vorbeifahren den Bereich neben dem fahrenden Fahrzeug überwachen. Mit dieser Überwachung können sowohl Freiräume, als auch Hindernisse erkannt werden. Dabei werden die Freiräume zwischen den Hindernissen dahingehend überprüft, ob sie sich als Parklücke für das fahrende Fahrzeug eignen. Ist dies der Fall, wird im Fahrzeug angezeigt, dass eine passende Parklücke gefunden worden ist. Der Fahrer muss nun das Fahrzeug weiter in Fahrtrichtung bewegen, um zu einer Position zu gelangen, ab welcher er den Einparkvorgang durchführen kann. Diese Durchführung kann vom Fahrer selbst, also manuell, oder aber automatisch oder semiautomatisch durch das Einparkhilfesystem gesteuert werden. Um dem Fahrer beziehungsweise dem Einparkhilfesystem anzuzeigen, dass das Fahrzeug eine Position erreicht hat, ab welcher der Einparkvorgang durchgeführt werden kann, wird nach dem Erkennen eines Freiraums als Parklücke für das Fahrzeug sowohl eine hintere, als auch eine vordere Einparkgrenze gesetzt. Die vordere Einparkgrenze bestimmt dabei die Position, welche das Fahrzeug erreichen muss, um in gewünschter Weise die Manöver zu starten, die das Fahrzeug während des Einparkvorgangs durchführt, um dieses in die Parklücke hineinzubewegen. Dabei wird als hintere Einparkgrenze die Position des Fahrzeugs während des Einparkvorganges definiert, bei welcher der erste Rückwärtsfahrtzug beendet ist und an welcher Position sich zu diesem Zeitpunkt der hinterste Punkt des Fahrzeugs bezüglich der Umgebungskoordinaten befindet. Dabei ist es bekannt, einen akzeptablen Einparkvorgang dahingehend zu definieren, dass das Heck bei dem ersten Rückwärtsfahrtzug im Wesentlichen vollständig in die Parklücke eintaucht. Andere Einparkmanöver sind vom Fahrer üblicherweise nicht erwünscht, da sie ein häufigeres Manövrieren, also mehrere Fahrzeugbewegungen nacheinander in unterschiedliche Bewegungsrichtungen erfordern.

Nachteilhaft bei den bekannten Verfahren ist es, dass diese dazu führen, dass zum Teil Parklücken erkannt werden, diese als passend für das Fahrzeug angezeigt werden und anschließend ein Einparken nicht möglich ist. Befindet sich die Parklücke zum Beispiel in einer Position, bei welcher das Fahrzeug am Weiterfahren in die notwendige Position für den Beginn des Einparkvorgangs gehindert wird, so ist zwar die Parklücke ausreichend groß für das Fahrzeug und auch als eine derartige Parklücke angezeigt worden, jedoch kann der Fahrer den Einparkvorgang weder automatisch, noch manuell oder semiautomatisch starten. Mit anderen Worten führt dies zur Frustration des Fahrers, da er zwar eine Parklücke gefunden hat, diese jedoch für sein Fahrzeug nicht nützen kann.

### OFFENBARUNG DER ERFINDUNG

Es ist Aufgabe der vorliegenden Erfindung, die bekannten Verfahren zum Unterstützen eines automatischen Einparkvorgangs, insbesondere eines Quereinparkvorgangs, eines Einparkhilfesystems eines Fahrzeugs sowie entsprechender Fahrzeuge zu beheben. Insbesondere ist es Aufgabe der vorliegenden Erfindung, ein Verfahren zum Unterstützen eines automatischen Einparkvorgangs, insbesondere eines Quereinparkvorgangs, eines Einparkhilfesystems eines Fahrzeugs sowie ein entsprechendes Fahrzeug mit einer Regeleinheit zur Ausführung eines derartigen Verfahrens zur Verfügung zu stellen, wobei das Verfahren in der Lage ist, eine verbesserte Verfügbarkeit des Einparkhilfesystems zur Verfügung zu stellen. Dies soll insbesondere möglichst kostengünstig und einfach erzielt werden.

Voranstehende Aufgabe wird gelöst mit Hilfe eines Verfahrens zum Unterstützen eines automatischen Einparkvorgangs eines Einparkhilfesystems eines Fahrzeugs mit den Merkmalen des unabhängigen Anspruchs 1 sowie durch ein Fahrassistenzsystem mit den Merkmalen des unabhängigen Anspruchs 10 und ein Fahrzeug mit den Merkmalen des unabhängigen Anspruchs 11. Weitere Merkmale und Details der Erfindung ergeben sich aus den Unteransprüchen, der Beschreibung und den Zeichnungen. Dabei gelten Merkmale und Details, die in Zusammenhang mit den erfindungsgemäßen Verfahren beschrieben sind, selbstverständlich auch in Zusammenhang mit dem erfindungsgemäßen Fahrzeug sowie dem erfindungsgemäßen Fahrassistenzsystem und jeweils umgekehrt, sodass bezüglich der Offenbarung zu den einzelnen Erfindungsaspekten stets wechselseitig Bezug genommen wird beziehungsweise werden kann.

Ein erfindungsgemäßes Verfahren zum Unterstützen eines automatischen Einparkvorgangs eines Einparkhilfesystems eines Fahrzeugs in eine Parklücke, insbesondere eine Querparklücke, weist die folgenden Schritte auf:
- Erfassen von Sensorsignalen mittels mindestens eines Sensors des Fahrzeugs zum Ermitteln von neben dem Fahrzeug befindlichen Freiräumen und/oder Hindernissen quer oder im Wesentlichen quer zur Fahrtrichtung des Fahrzeugs,
- Überprüfen der ermittelten Freiräume auf deren Eignung als Parklücke für das Fahrzeug,
- Anzeigen einer Querparkmöglichkeit für das Fahrzeug bei erkannter Eignung eines Freiraums als Parklücke,
- Setzen einer hinteren Einparkgrenze und einer vorderen Einparkgrenze,
- Erfassen von Sensorsignalen mittels zumindest eines Sensors des Fahrzeugs zum Ermitteln von Hindernissen in Fahrtrichtung des Fahrzeugs, und
- Verändern der hinteren Einparkgrenze in Abhängigkeit von den ermittelten Hindernissen in Fahrtrichtung des Fahrzeugs.

Ein erfindungsgemäßes Verfahren unterstützt dabei einen automatischen Einparkvorgang, insbesondere einen Quereinparkvorgang, eines Einparkhilfesystems eines Fahrzeugs. Es unterscheidet sich von bekannten Verfahren insbesondere dadurch, dass eine Veränderung der hinteren Einparkgrenze in Abhängigkeit von Hindernissen in Fahrtrichtung des Fahrzeugs, also vor dem Fahrzeug, durchgeführt wird. So ist zwar bereits bekannt, dass nach dem Erkennen eines Freiraums als Parklücke für das fahrende Fahrzeug eine hintere und eine vordere Einparkgrenze gesetzt werden, jedoch wird bei den bekannten Verfahren ein Einparken in diese Parklücke ausgeschlossen, wenn das Fahrzeug nicht in der Lage ist die vordere Einparkgrenze zu erreichen. Durch ein erfindungsgemäßes Verfahren wird bei einem Hindernis, welches in Fahrtrichtung des Fahrzeugs, also vor diesem, erkannt wird und dieses daran hindert, die vordere Einparkgrenze zu erreichen, die hintere Einparkgrenze verändert. Das Verändern erfolgt dabei vorteilhafter Weise in einer Richtung, die ein Einparken des Fahrzeugs auch dann erlaubt, wenn die vordere Einparkgrenze von dem Fahrzeug nicht erreicht werden kann.

Die hintere Einparkgrenze definiert also ein Kriterium, welches das Einparken mit Hilfe des Einparkhilfesystems des Fahrzeugs erlaubt oder verbietet. Durch das Verändern der hinteren Einparkgrenze kann dieses Kriterium verändert werden, sodass im Vergleich zu bekannten Verfahren nun auch bei erkannten Parklücken ein Einparken durch das Einparkhilfesystem des Fahrzeugs möglich wird, bei welchen dies bisher nicht möglich war. Durch das Verändern der hinteren Einparkgrenze wird jedoch in Kauf genommen, dass möglicherweise aufwendigere Parktrajektorien beziehungsweise eine größere Anzahl von Parkmanövern notwendig werden, um das Fahrzeug in die Parklücke hineinzubewegen. Insbesondere wird auf diese Weise in Kauf genommen, dass sich bei dem ersten Rückwärtsfahrtzug des Fahrzeugs zum Bewegen desselben in die Parklücke, das Heck des Fahrzeugs nicht oder nur teilweise in die Parklücke hineinbewegt.

Es ist darauf hinzuweisen, dass es sich beim erfindungsgemäßen Verfahren um die Unterstützung eines automatischen Einparkvorgangs, insbesondere eines Quereinparkvorgangs, und nicht um den automatischen Einparkvorgang selbst handelt. So wird ein erfindungsgemäßes Verfahren vielmehr dahingehend Anwendung finden, dass es die Möglichkeiten einen automatischen Einparkvorgang durchzuführen auf bisher unmögliche Parksituationen ausdehnt. Dies entspricht einer erhöhten Verfügbarkeit für automatische Einparkvorgänge eines Einparkhilfesystems eines Fahrzeugs. Mit anderen Worten können auf diese Weise mit Hilfe des Einparkhilfesystems eines Fahrzeugs durch ein erfindungsgemäßes Verfahren auch Parklücken zum Parken des Fahrzeugs verwendet werden, die bisher als unmögliche Parklücken ausgeschlossen waren.

Ein erfindungsgemäßes Verfahren wird dabei vorteilhafter Weise nur dann durchgeführt, wenn der Fahrer des Fahrzeugs einen Einparkwunsch hat. Dies kann zum Beispiel dadurch erkannt werden, dass sich das Fahrzeug unterhalb einer bestimmten Geschwindigkeit bewegt, dass der Fahrer den Blinker oder die Warnblinkanlage eingeschaltet hat, oder er aktiv den Parkwunsch in das System eingegeben hat. Derartige Kriterien können auch miteinander kombiniert werden.

Unter einer "Querparklücke" im Rahmen der vorliegenden Erfindung ist eine Parklücke zu verstehen, die sich quer oder im Wesentlichen quer zur Fahrtrichtung des Fahrzeugs erstreckt. Dementsprechend fallen unter diese Definition auch Parklücken, die ein sogenanntes Schrägparken des Fahrzeugs mit einem Anstellwinkel zwischen der Fahrtrichtung des Fahrzeugs und der Ausrichtung des Fahrzeugs in der Parklücke ermöglichen, der spitzwinklig ausgebildet ist.

Die Eignung eines Freiraums als Parklücke wird dabei von dem System, welches ein erfindungsgemäßes Verfahren durchführt, in Abhängigkeit der geometrischen Maße des Fahrzeugs durchgeführt. Das Anzeigen einer gefundenen Parklücke kann sowohl optisch, als auch akustisch oder haptisch erfolgen. Insbesondere können dabei Anzeigevorrichtungen verwendet werden, die bereits einen anderen Nutzen im Fahrzeug erfüllen. Dies können zum Beispiel akustische Wiedergabevorrichtungen sein, die für den automatischen Einparkvorgang eingesetzt werden. Die Sensoren können insbesondere Ultraschallsensoren und/oder Kamerasysteme eines Parkhilfesystems oder einer Umgebungsüberwachung sein.

Es kann von Vorteil sein, wenn bei einem erfindungsgemäßen Verfahren durch die Veränderungen der hinteren Einparkgrenze der Abstand zwischen dieser und der Position des Fahrzeugs zu Beginn des nachfolgenden Einparkvorgangs vergrößert ist. Mit anderen Worten bedeutet dies, dass die hintere Einparkgrenze in einer Richtung verändert wird, welche sich von dem Fahrzeug beabstandet. Es kann also von einem Verschieben der hinteren Einparkgrenze entgegen der Fahrtrichtung des Fahrzeugs in seiner Vorwärtsbewegung gesprochen werden. Dies führt dazu, dass die veränderte hintere Einparkgrenze, also die neue hintere Einparkgrenze, an einer Position liegt, welche zu einer Endposition des Fahrzeugs nach dem ersten Rückwärtsfahrzyklus zu Beginn des Einparkvorganges führt, bei welcher das Heck des Fahrzeugs nicht oder nur teilweise in die Parklücke eingetaucht ist. Sozusagen befindet sich zumindest ein Teil des Hecks, also insbesondere eine Rückleuchte des Fahrzeugs, nach diesem ersten Rückwärtsfahrtzug außerhalb der Parklücke. Dies führt, je nach den weiteren Platzverhältnissen, zu einer höheren Anzahl von Einparkmanövern, also zu einer höheren Zahl von Fahrtrichtungswechseln während des Einparkvorgangs. Jedoch wird durch die Inkaufnahme dieses geringen Nachteils auch in einer beengten Parksituation durch das Verändern der hinteren Einparkgrenze das Einparken in die Parklücke möglich. Es entsteht damit also ein größerer Zulässigkeitsbereich für das automatische Einparken des Fahrzeugs wodurch sich die Verfügbarkeit des automatischen Einparkvorganges erhöht.

Erfindungsgemäß entspricht bei einem erfindungsgemäßen Verfahren die Veränderung der hinteren Einparkgrenze dem Abstand zwischen der vorderen Einparkgrenze und einem Hindernis in Fahrtrichtung des Fahrzeugs, das zwischen der vorderen Einparkgrenze und dem Fahrzeug erkannt worden ist. Mit anderen Worten wird also die Veränderung der hinteren Einparkgrenze in einer Art und Weise durchgeführt, dass diese um den Betrag verschoben wird, welcher dem Fahrzeug in Fahrtrichtung fehlt, um die vordere Einparkgrenze zu erreichen. Auf diese Weise erfolgt die Veränderung, also das Verschieben der hinteren Einparkgrenze, in direkter Abhängigkeit von dem erkannten Hindernis in Fahrtrichtung des Fahrzeugs, sodass die Veränderung der hinteren Einparkgrenze hinsichtlich des Wertes der Veränderung insbesondere minimiert werden kann. Die entsprechenden Abstände beziehungsweise der Wert für die Verschiebung der hinteren Einparkgrenze sind dabei in ihrer Ausrichtung insbesondere auf die Fahrtrichtung des Fahrzeugs oder im Wesentlichen auf diese Fahrtrichtung bezogen.

Ein weiterer Vorteil ist es, wenn bei einem erfindungsgemäßen Verfahren nach dem Verändern der hinteren Einparkgrenze, bei Erreichen eines vordefinierten Abstands des Fahrzeugs zu der hinteren Einparkgrenze, die Möglichkeit der Durchführung des Einparkvorgangs angezeigt wird. Nach dem Verändern der hinteren Einparkgrenze, welches unter anderem auf dem Erkennen eines Hindernisses in Fahrtrichtung des Fahrzeugs beruht, ist es in den meisten Fällen unmöglich, dass das Fahrzeug die vordere Einparkgrenze noch erreicht. Dementsprechend wird es unmöglich, dass das Fahrzeug eine Position erreicht, in welcher das Einparkhilfesystem die Durchführung des Einparkvorganges in bekannter Weise freigibt. Um nun trotzdem durch die Veränderung der hinteren Einparkgrenze die gewünschte Freigabe für den Einparkvorgang zu erhalten, kann durch die Adaption des Freigabekriteriums diese Durchführung freigegeben werden. So bezieht sich bei dieser Ausführungsform die Freigabe des Einparkvorgangs nicht mehr auf die vordere Einparkgrenze, sondern nur noch auf den notwendigen Abstand zwischen der hinteren Einparkgrenze nach deren Veränderung und dem Abstand derselben zu dem Fahrzeug. Die Anzeige der Möglichkeit der Durchführung des Einparkvorgangs erfolgt dabei vorteilhafter Weise optisch, akustisch und/oder haptisch. Insbesondere können dabei Systeme verwendet werden, die bereits in dem Fahrzeug vorhanden sind, wie dies zum Beispiel das Einparkhilfesystem oder sonstige Anzeigevorrichtungen sind. Ein weiterer Vorteil ist es, dass bei dieser Ausführungsform nur ein Wert geändert werden muss, nämlich die hintere Einparkgrenze. Dabei wird sozusagen das Kriterium für das Ausführen des automatischen Einparkvorgangs verändert, ohne dass in diesen selbst eingegriffen werden muss. So kann ohne eine Abänderung automatischer Einparkhilfesysteme ein erfindungsgemäßes Verfahren die Verfügbarkeit derselben deutlich erhöhen.

Auch vorteilhaft ist es, wenn bei einem erfindungsgemäßen Verfahren die Veränderung der hinteren Einparkgrenze kleiner oder gleich einer vordefinierten maximalen Veränderung der hinteren Einparkgrenze ist. Mit anderen Worten wird die Veränderung der hinteren Einparkgrenze beschränkt. Die Beschränkung erfolgt dabei insbesondere in einer Art und Weise, die dazu führt, dass die Anzahl der zusätzlichen Manövriervorgänge begrenzt wird. So wird auf diese Weise verhindert, dass eine Parklücke zum automatischen Einparken ausgewählt wird, welche eine unangemessen große Anzahl von Manövrierzyklen notwendig machen würde, um das Fahrzeug in dieselbe zu bewegen. So kann mit anderen Worten durch die Begrenzung der Veränderung der hinteren Einparkgrenze der Grad der Verschlechterung des Manövrierens des Einparkvorgangs vordefiniert werden, welcher in Kauf genommen wird, um die Verfügbarkeit des automatischen Einparkvorganges zu erhöhen. Dabei wird insbesondere abgewogen, inwieweit der Fahrer bereit ist zusätzliche Manövrierzyklen in Kauf zu nehmen, um eine Parklücke auch in schwierigen Einparksituationen für sein Fahrzeug verwenden zu können.

Ein weiterer Vorteil ist es, wenn bei einem erfindungsgemäßen Verfahren durch die Veränderung der hinteren Einparkgrenze eine neue hintere Einparkgrenze gesetzt wird, deren Abstand zur gesetzten hinteren Einparkgrenze minimiert ist. Das bedeutet, dass die Veränderung selbst minimiert wird, sodass unnötig große Veränderungen verhindert werden. Da die Veränderung der hinteren Einparkgrenze gleichzeitig vom Fahrer des Fahrzeugs zumeist als Verschlechterung des Einparkvorgangs wahrgenommen wird, kann auf diese Weise nicht nur die Verschiebung der hinteren Einparkgrenze, sondern auch der Grad der gefühlten Verschlechterung beim Fahrer minimiert werden. Mit anderen Worten werden unnötig große Veränderungen der hinteren Einparkgrenze verhindert.

Ebenfalls vorteilhaft ist es, wenn bei einem erfindungsgemäßen Verfahren nach der Erkennung einer Parklücke und der Erkennung eines Hindernisses in Fahrtrichtung des Fahrzeugs eine optimale Position des Fahrzeugs für den Beginn der Durchführung des Einparkvorgangs ermittelt wird. Die optimale Position des Fahrzeugs kann dabei insbesondere angezeigt werden oder aber semiautomatisch oder automatisch angefahren werden. Die optimale Position entspricht dabei insbesondere nicht der Position, welche das Fahrzeug üblicherweise durch ein Verfolgen, also ein Beibehalten, der aktuellen Fahrtrichtung erhalten würde. So kann es vorteilhaft sein, wenn die optimale Position durch ein Verändern der Fahrtrichtung, also durch eine Lenkbewegung für das Fahrzeug erreicht wird. Insbesondere vorteilhaft ist es, wenn bei einer derartigen Ausführungsform die optimale Position des Fahrzeugs auf einer Minimierung der Veränderung der hinteren Einparkgrenze beruht. Ist es also möglich, dass bereits frühzeitig ein Hindernis in Fahrtrichtung des Fahrzeugs erkannt wird, welches insbesondere das Erreichen der vorderen Einparkgrenze verhindert, so kann auf dieses Hindernis frühzeitig reagiert werden. Die Reaktion erfolgt in einer Art und Weise, dass zum Beispiel ein Lenkeinschlag des Fahrzeugs erfolgt oder vorgeschlagen wird, um das Fahrzeug in eine bessere Position, insbesondere eine optimale Position, zu Beginn des eigentlichen Einparkvorgangs zu bringen. Der Lenkeinschlag bereitet sozusagen den ersten Rückwärtsfahrtzug des Fahrzeugs vor. Mit dieser Vorbereitung kann die Veränderung der hinteren Einparkgrenze minimiert, insbesondere der Abstand zwischen der hinteren Einparkgrenze, die gesetzt worden ist, und der neuen hinteren Einparkgrenze auf ein Minimum reduziert werden.

Auch vorteilhaft kann es sein, wenn bei einem erfindungsgemäßen Verfahren die Anzeige einer Parkmöglichkeit unter der Voraussetzung erfolgt, dass kein Hindernis in Fahrtrichtung des Fahrzeugs erkannt worden ist oder dass in Fahrtrichtung des Fahrzeugs erkannte Hindernis zu einer zugelassenen Veränderung der hinteren Einparkgrenze führt. Insbesondere in Kombination mit Zulässigkeitsvoraussetzungen für die Veränderung der hinteren Parkgrenze führt diese Ausführungsform eines erfindungsgemäßen Verfahrens dazu, dass die Anzeige der Parkmöglichkeit dann unterbleibt, wenn ein Hindernis in einer Art und Weise vorliegt, die eine Veränderung der hinteren Parkgrenze in dem zugelassenen Rahmen unmöglich macht. Wird also zum Beispiel eine maximale Verschiebung der hinteren Einparkgrenze vorgegeben und würde ein Hindernis in Fahrtrichtung des Fahrzeugs dazu führen, dass die hintere Einparkgrenze zu stark, also über diesen vorgegebenen Rahmen hinaus, verändert werden müsste, so unterlässt ein erfindungsgemäßes Verfahren dieser Ausführungsform die Anzeige der Parkmöglichkeit. Dies bringt den Vorteil mit sich, dass der Fahrer über die Parklücke neben sich nicht als Parkmöglichkeit für sein Fahrzeug informiert wird, und dementsprechend auch nicht enttäuscht wird, dass er diese Parklücke trotz deren grundsätzlicher Eignung für das Fahrzeug nicht verwenden kann.

Ebenfalls Gegenstand der vorliegenden Erfindung ist ein Fahrassistenzsystem für ein Fahrzeug, aufweisend wenigstens ein Sensorsystem mit zumindest einem Sensor und eine damit in signalkommunizierender Weise verbundene Regeleinheit, die zur Ausführung eines erfindungsgemäßen Verfahrens eingerichtet ist. Dementsprechend bringt ein solches Fahrassistenzsystem die gleichen Vorteile mit sich, wie sie ausführlich mit Bezug auf das erfindungsgemäße Verfahren erläutert worden sind.

Ein weiterer Gegenstand der vorliegenden Anmeldung ist ein Fahrzeug aufweisend ein Fahrassistenzsystem mit wenigstens einem Sensorsystem mit zumindest einem Sensor und eine damit in signalkommunizierender Weise verbundene Regeleinheit, die zur Ausführung eines Verfahrens gemäß der vorliegenden Erfindung eingerichtet ist. Dabei können sowohl das Sensorsystem, als auch die Regeleinheit ein Bestandteil des Fahrassistenzsystems sein. In einer solchen Ausführungsform kann ein erfindungsgemäßes Verfahren sozusagen als ein vorgeschalteter Teil eines automatischen Einparkverfahrens ausgebildet werden.

### BEVORZUGTE AUSFÜHRUNGSBEISPIELE

Die Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Figur 1a: ein gemäß dem Stand der Technik durchgeführtes Verfahren mit einem Fahrzeug bei der Erkennung einer Parklücke,
- Figur 1b: die Situation nachfolgend der Figur 1a und zu Beginn eines automatischen Einparkvorgangs,
- Figur 1c: die Position des Fahrzeugs nachfolgend den der Figuren 1a und 1 b nach Beendigung des ersten Rückwärtsfahrmanövers,
- Figur 2a: eine Ausführungssituation eines erfindungsgemäßen Verfahrens bei Erkennung einer Parklücke,
- Figur 2b: eine Ausführungsform eines erfindungsgemäßen Verfahrens bei Erkennung eines Hindernisses in Fahrtrichtung des Fahrzeugs nachfolgend der Fig. 2a,
- Figur 2c: die Situation bei einem erfindungsgemäßen Verfahren nach dem ersten Rückwärtsfahrmanöver des Fahrzeugs nachfolgend der Fig. 2b,
- Figur 3a: eine Situation einer weiteren Ausführungsform eines erfindungsgemäßen Verfahrens bei Erkennung einer Parklücke,
- Figur 3b: eine Situation einer Ausführungsform eines erfindungsgemäßen Verfahrens mit einer Bewegung des Fahrzeugs in eine optimierte Position nachfolgend der Fig. 3a,
- Figur 3c: die Situation eines erfindungsgemäßen Verfahrens nachfolgend der Figur 3b hinsichtlich des Fahrzeugs nach dem ersten Rückwärtsfahrmanöver, und
- Figur 4: eine schematische Darstellung einer Ausführungsform eines erfindungsgemäßen Fahrzeugs.

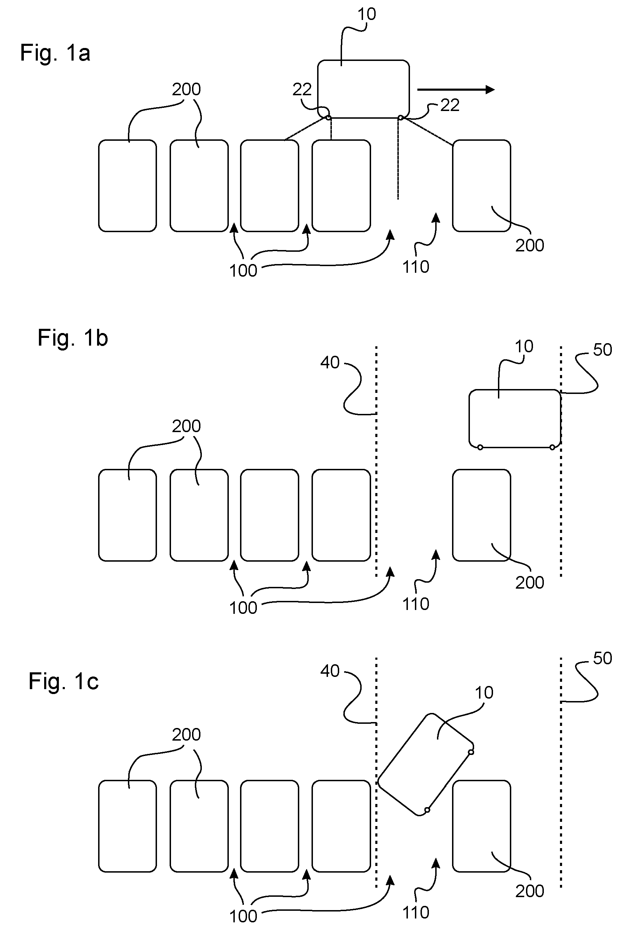

Anhand der Figuren 1 a, 1 b und 1 c wird kurz ein bekanntes Verfahren eines Einparkvorganges erläutert. Ein Fahrzeug 10, wie in Figur 1a dargestellt, bewegt sich an einer Reihe von Hindernissen 200, zum Beispiel geparkten Fahrzeugen, vorbei. Dabei wird über Sensoren 22 des Fahrzeugs 10 neben dem Fahrzeug 10 wahrgenommen, ob sich dort Hindernisse 200 oder Freiräume 100 befinden. Es werden sowohl Freiräume 100 zwischen nebeneinander geparkten Fahrzeugen als Hindernis 200 wahrgenommen, als auch Freiräume 100, die als Parklücke 110 dienen können. Bei der Überprüfung der Freiräume 100 auf deren Eignung als Parklücke 110, wird bei einer Erkennung einer solchen diese angezeigt und sowohl eine hintere Einparkgrenze 40, als auch eine vordere Einparkgrenze 50 gesetzt, wie dies der Figur 1 b zu entnehmen ist. Die hintere Einparkgrenze 40 entspricht dabei einer Position des Hecks des Fahrzeugs 10 nach dem ersten Rückwärtsfahrmanöver desselben. Eine solche Situation ist in Figur 1c dargestellt, nachdem das Fahrzeug 10, nach Erreichen der vorderen Einparkgrenze 50 in Figur 1 b, den automatischen Einparkvorgang gestartet hat. Bei dieser Ausführungsform ist also die hintere Einparkgrenze 40 so gesetzt, dass das Heck des Fahrzeugs 10 bei dem ersten Rückwärtsfahrzyklus im Wesentlichen vollständig oder vollständig in die Parklücke 110 eintaucht.

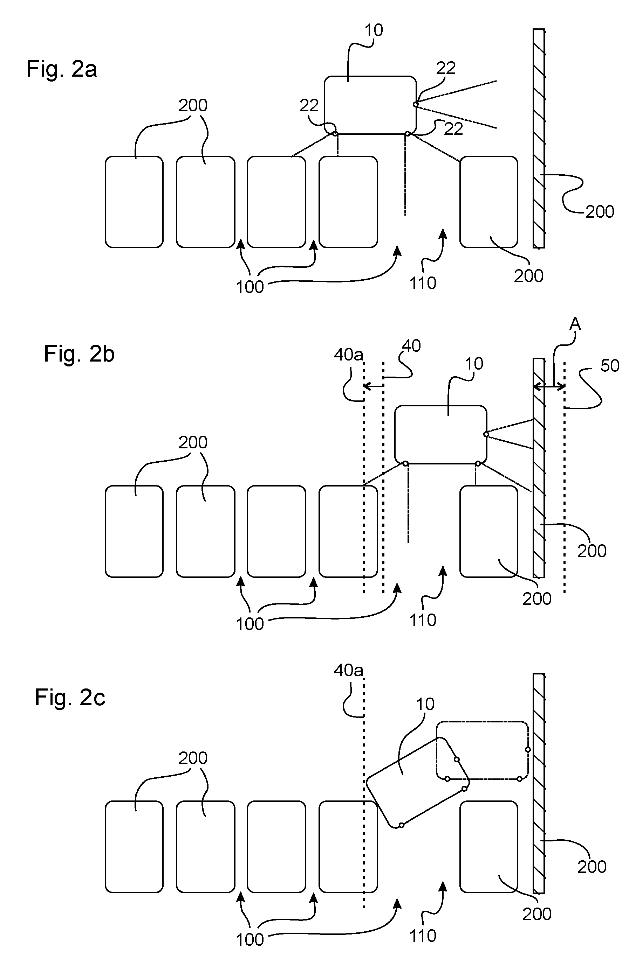

Anhand der Figuren 2a bis 2c wird nun erläutert, inwieweit durch ein erfindungsgemäßes Verfahren die Verfügbarkeit des automatischen Einparkvorgangs, insbesondere eines Quereinparkvorgangs, vergrößert wird. In identischer Weise zu Figur 1 a bewegt sich auch in Figur 2a ein Fahrzeug 10 entlang einer Reihe von geparkten Fahrzeugen, die als Hindernisse 200 neben dem Fahrzeug 10 erkannt werden. Über die Sensoren 22 an einer Seite des Fahrzeugs 10 werden darüber hinaus die Freiräume 100 erkannt und hinsichtlich der Eignung als Parklücke 110 ausgewertet. Zusätzlich zu den seitlichen Sensoren 22 ist auch ein Frontsensor 22 an dem Fahrzeug 10 angeordnet, welcher auch Hindernisse 200 in Fahrtrichtung des Fahrzeugs 10, also vor demselben, erkennen kann. Befindet sich nun ein Fahrzeug 10 gemäß der Figur 2b in der Situation, dass es einen Freiraum 100 als Parklücke 110 erkannt, sowohl die hintere Einparkgrenze 40, als auch die vordere Einparkgrenze 50 gesetzt, aber nun ein Hindernis 200 in Fahrtrichtung des Fahrzeugs 10 erkannt hat, so wird eine Veränderung der hinteren Einparkgrenze 40 durchgeführt. Diese Veränderung ist abhängig von dem erkannten Hindernis 200 in Fahrtrichtung des Fahrzeugs 10. Die Abhängigkeit beruht dabei insbesondere auf dem Abstand A zwischen der gesetzten vorderen Einparkgrenze 50 und dem erkannten Hindernis 200 in Fahrtrichtung des Fahrzeugs 10. Durch das Verändern der hinteren Einparkgrenze 40 wird eine neue Einparkgrenze 40a gesetzt.

Wie aus Figur 2c zu erkennen ist, wird nun der Einparkvorgang durchgeführt, obwohl das Fahrzeug 10 die vordere Einparkgrenze 50 nicht erreichen kann. Vielmehr startet der Einparkvorgang zu einem Zeitpunkt zu dem das Fahrzeug 10 die in Figur 2c als gestrichelte Position dargestellte Position erreicht hat. Nach Beendigung des ersten Rückwärtsfahrzyklus wird das Fahrzeug 10 die mit durchgezogener Linie dargestellte Position gemäß Figur 2c erreicht haben, sodass der äußerste Punkt des Hecks an der hinteren Einparkgrenze 40a angelangt ist, welche durch die Veränderung der gesetzten hinteren Einparkgrenze 40 nun auch einen Einparkvorgang erlaubt, bei welchem das Heck des Fahrzeugs 10 bei dem ersten Rückwärtsfahrzyklus nicht vollständig, sondern nur teilweise in die Parklücke 110 eintaucht. Auf diese Weise wurde die Verfügbarkeit des automatischen Einparkvorgangs erhöht, da bei einem bekannten Verfahren die Situation der Figuren 2a bis 2c einen Einparkvorgang des Fahrzeugs 10 nicht ermöglicht hätte.

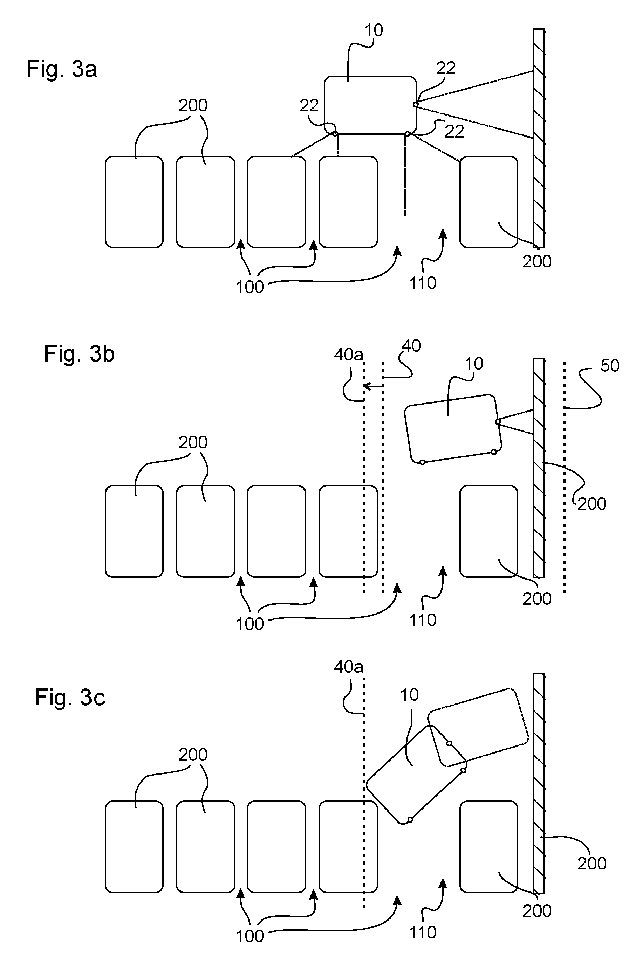

Anhand der Figuren 3a bis 3c wird eine alternative Ausführungsform eines erfindungsgemäßen Verfahrens für die Unterstützung eines automatischen Einparkvorgangs, insbesondere eines Quereinparkvorgangs, erläutert. Diese ist sehr ähnlich zu der Ausführungsform der Figuren 2a bis 2c, sodass die gleichen Verfahrensschritte nicht nochmals beschrieben werden. Der Unterschied des Verfahrens der Figuren 3a bis 3c zu dem der Figuren 2a bis 2c liegt darin, dass durch den Sensor 22 an der Front des Fahrzeugs 10 das Hindernis 200 in Fahrtrichtung des Fahrzeugs 10 deutlich früher wahrgenommen werden kann. Dies ermöglicht es neben der Veränderung der hinteren Einparkgrenze 40 auf die neue Einparkgrenze 40a, auch eine vorbereitende Maßnahme für die Positionierung des Fahrzeugs 10 durchzuführen. Dies zeigt sich bereits in Figur 3b, in welcher das Fahrzeug 10 seine Fahrtrichtung ändert, also einen Lenkeinschlag durchgeführt hat. Der Lenkeinschlag führt dazu, dass das Fahrzeug 10 sich in eine vorbereitende Position, insbesondere eine optimale Position, für den nachfolgend durchzuführenden automatischen Einparkvorgang bringt. Die optimale Position ist beispielhaft in Figur 3c in gestrichelter Weise angedeutet. Aus dieser Position kann das Fahrzeug 10 nun ebenfalls wieder mit einem ersten Rückfahrzyklus den automatischen Einparkvorgang beginnen und erreicht die neue Einparkgrenze 40a. Bei dieser Position befindet sich das Fahrzeug 10 nun an der hinteren Einparkgrenze 40a, jedoch sind die nachfolgenden Manöver für die folgenden Einparkschritte in die Parklücke 110 optimiert, da insbesondere eine geringere Anzahl notwendig ist, als dies ohne die Vorbereitung gemäß der Figuren 2a bis 2c möglich wäre. Auch kann auf diese Weise der Grad der Veränderung der hinteren Einparkgrenze 40 weiter reduziert, insbesondere minimiert, werden.

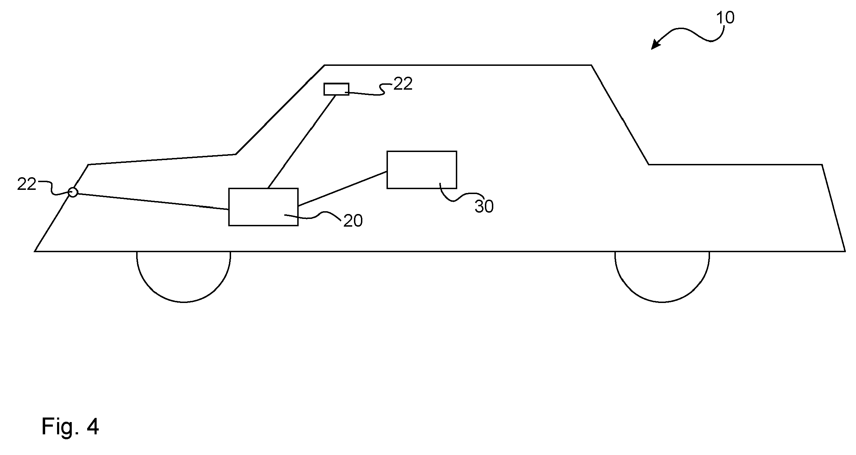

In Figur 4 ist eine schematische Darstellung eines erfindungsgemäßen Fahrzeugs 10 gezeigt. Dieses ist mit einem Sensorsystem 20 ausgestattet, welches bei dieser Ausführungsform sowohl einen seitlichen Sensor 22, der in dieser Ansicht nicht dargestellt ist, wie auch Frontsensoren 22 und Frontkameras 22 aufweist. Die Frontsensoren 22 können zum Beispiel die Ultraschallsensoren des automatischen Einparkhilfesystems sein. Ein Kamerasystem kann zum Beispiel aus der Umgebungsüberwachung, wie zum Beispiel als Spurhalteassistent, als Abstandswarnassistent oder zur Erkennung von Verkehrszeichen verwendet werden. Weiter ist bei dieser Ausführungsform eines erfindungsgemäßen Fahrzeugs 10 eine Regeleinheit 30 vorgesehen, welche für die Durchführung eines erfindungsgemäßen Verfahrens eingerichtet ist.

Selbstverständlich handelt es sich bei der voranstehenden Beschreibung ausschließlich um beispielhafte Ausführungsformen. Die beschriebenen Merkmale können dementsprechend frei miteinander, sofern technisch sinnvoll, kombiniert werden, ohne den Rahmen der vorliegenden Erfindung zu verlassen.

## Patentansprüche

1. Verfahren zum Unterstützen eines automatischen Einparkvorgangs eines Einparkhilfesystems eines Fahrzeugs (10) in eine Parklücke (110), insbesondere eine Querparklücke, aufweisend die folgenden Schritte:
• Erfassen von Sensorsignalen mittels mindestens eines Sensors (22) des Fahrzeugs (10) zum Ermitteln von neben dem Fahrzeug (10) befindlichen Freiräumen (100) und/oder Hindernissen (200) quer oder im Wesentlichen quer zur Fahrtrichtung des Fahrzeugs (10),
• Überprüfen der ermittelten Freiräume (100) auf deren Eignung als Parklücke (110) für das Fahrzeug (10),
• Anzeigen einer Querparkmöglichkeit für das Fahrzeug (10) bei erkannter Eignung eines Freiraums (100) als Parklücke (110), Setzen einer hinteren Einparkgrenze (40) und einer vorderen Einparkgrenze (50),
• Erfassen von Sensorsignalen mittels mindestens eines Sensors (22) des Fahrzeugs (10) zum Ermitteln von Hindernissen (200) in Fahrrichtung des Fahrzeugs (10), und
**gekennzeichnet durch** den folgenden Schritt:
• Verändern der hinteren Einparkgrenze (40) in Abhängigkeit von den ermittelten Hindernissen (200) in Fahrtrichtung des Fahrzeugs (10), wobei die Einparkgrenze um den Betrag verschoben wird, welcher dem Fahrzeug (10) in Fahrtrichtung fehlt, um die vordere Einparkgrenze (50) zu erreichen,
wobei **durch** die Veränderung der hinteren Einparkgrenze (40) eine neue hintere Einparkgrenze (40a) gesetzt wird, deren Abstand zur gesetzten hinteren Einparkgrenze (40) minimiert ist, wobei die entsprechenden Abstände oder der Wert für die Verschiebung auf die Fahrtrichtung des Fahrzeugs bezogen ist.

2. Verfahren nach Anspruch 1, **dadurch gekennzeichnet, dass** durch die Veränderung der hinteren Einparkgrenze (40) der Abstand zwischen dieser und der Position des Fahrzeugs (10) zu Beginn des nachfolgenden Einparkvorgangs vergrößert ist.

3. Verfahren nach einem der vorangegangenen Ansprüche, **dadurch gekennzeichnet, dass** die Veränderung der hinteren Einparkgrenze (40) dem Abstand zwischen der vorderen Einparkgrenze (50) und einem Hindernis (200) in Fahrtrichtung des Fahrzeugs (10), das zwischen der vorderen Einparkgrenze (50) und dem Fahrzeug (10) erkannt worden ist, entspricht.

4. Verfahren nach einem der vorangegangenen Ansprüche, **dadurch gekennzeichnet, dass** nach dem Verändern der hinteren Einparkgrenze (40) bei Erreichen eines vordefinierten Abstands des Fahrzeugs (10) zu der hinteren Einparkgrenze (40), die Möglichkeit der Durchführung des Einparkvorgangs angezeigt wird.

5. Verfahren nach einem der vorangegangenen Ansprüche, **dadurch gekennzeichnet, dass** die Veränderung der hinteren Einparkgrenze (40) kleiner oder gleich einer vordefinierten maximalen Veränderung der hinteren Einparkgrenze (40) ist.

6. Verfahren nach einem der vorangegangenen Ansprüche, **dadurch gekennzeichnet, dass** nach der Erkennung einer Parklücke (110) und der Erkennung eines Hindernisses (200) in Fahrtrichtung des Fahrzeugs (10) eine optimale Position des Fahrzeugs (10) für den Beginn der Durchführung des Einparkvorgangs ermittelt wird.

7. Verfahren nach Anspruch 6, **dadurch gekennzeichnet, dass** die optimale Position des Fahrzeugs (10) auf einer Minimierung der Veränderung der hinteren Einparkgrenze (40) beruht.

8. Verfahren nach einem der vorangegangenen Ansprüche, **dadurch gekennzeichnet, dass** die Anzeige einer Parkmöglichkeit unter der Voraussetzung erfolgt, dass kein Hindernis (200) in Fahrtrichtung des Fahrzeugs (10) erkannt worden ist oder das in Fahrtrichtung des Fahrzeugs (10) erkannte Hindernis (200) zu einer zugelassenen Veränderung der hinteren Einparkgrenze (40) führt.

9. Fahrassistenzsystem für ein Fahrzeug (10), aufweisend wenigstens ein Sensorsystem (20) mit zumindest einem Sensor (22) und eine damit in signalkommunizierender Weise verbundene Regeleinheit (30), die zur Ausführung eines Verfahrens mit den Merkmalen eines der Ansprüche 1 bis 8 eingerichtet ist.

10. Fahrzeug (10), aufweisend ein Fahrassistenzsystem mit wenigstens einem Sensorsystem (20) mit zumindest einem Sensor (22) und eine damit in signalkommunizierender Weise verbundene Regeleinheit (30), die zur Ausführung eines Verfahrens mit den Merkmaien eines der Ansprüche 1 bis 8 eingerichtet ist.

## Claims

1. Method for assisting an automatic parking process of a parking assistance system of a vehicle (10) into a parking space (110), in particular a bay parking space, having the following steps of:
• recording sensor signals by means of at least one sensor (22) of the vehicle (10) in order to determine clearances (100) and/or obstacles (200) beside the vehicle (10) transversely or substantially transversely to the direction of travel of the vehicle (10),
• checking the determined clearances (100) for their suitability as a parking space (110) for the vehicle (10),
• indicating a bay parking possibility for the vehicle (10) if a clearance (100) is identified as being suitable as a parking space (110), setting a rear parking limit (40) and a front parking limit (50),
• recording sensor signals by means of at least one sensor (22) of the vehicle (10) in order to determine obstacles (200) in the direction of travel of the vehicle (10),
**characterized by** the following step of:
• changing the rear parking limit (40) on the basis of the obstacles (200) determined in the direction of travel of the vehicle (10), the parking limit being shifted by the amount needed by the vehicle (10) in the direction of travel to reach the front parking limit (50),
in which case the change of the rear parking limit (40) results in the setting of a new rear parking limit (40a) whose distance to the set rear parking limit (40) is minimized, the corresponding distances or the value for the shift being based on the direction of travel of the vehicle.

2. Method according to Claim 1, **characterized in that**, as a result of the change of the rear parking limit (40), the distance between the latter and the position of the vehicle (10) at the start of the subsequent parking process is increased.

3. Method according to one of the preceding claims, **characterized in that** the change of the rear parking limit (40) corresponds to the distance between the front parking limit (50) and an obstacle (200) in the direction of travel of the vehicle (10), which obstacle has been detected between the front parking limit (50) and the vehicle (10).

4. Method according to one of the preceding claims, **characterized in that**, after changing the rear parking limit (40), the possibility for carrying out the parking process is indicated when a predefined distance between the vehicle (10) and the rear parking limit (40) is reached.

5. Method according to one of the preceding claims, **characterized in that** the change of the rear parking limit (40) is less than or equal to a predefined maximum change of the rear parking limit (40).

6. Method according to one of the preceding claims, **characterized in that** an optimum position of the vehicle (10) for the start of carrying out the parking process is determined after a parking space (110) has been detected and after an obstacle (200) in the direction of travel of the vehicle (10) has been detected.

7. Method according to Claim 6, **characterized in that** the optimum position of the vehicle (10) is based on minimizing the change of the rear parking limit (40).

8. Method according to one of the preceding claims, **characterized in that** a parking possibility is indicated assuming that no obstacle (200) in the direction of travel of the vehicle (10) has been detected or the obstacle (200) detected in the direction of travel of the vehicle (10) results in a permitted change of the rear parking limit (40).

9. Driving assistance system for a vehicle (10), having at least one sensor system (20) with at least one sensor (22) and a control unit (30) which is connected to the sensor system for signal communication purposes and is set up to carry out a method having the features of one of Claims 1 to 8.

10. Vehicle (10) having a driving assistance system with at least one sensor system (20) with at least one sensor (22) and a control unit (30) which is connected to the sensor system for signal communication purposes and is set up to carry out a method having the features of one of Claims 1 to 8.

## Revendications

1. Procédé d'assistance à une manoeuvre automatique de stationnement pour un système d'aide au stationnement d'un véhicule (10) dans un emplacement de stationnement (110), en particulier un emplacement de stationnement orienté transversalement, le procédé présentant les étapes suivantes :
saisir des signaux au moyen d'au moins un capteur (22) du véhicule (10) pour déterminer les espaces libres (100) et/ou les obstacles (200) situés à côté du véhicule (10) transversalement ou essentiellement transversalement par rapport à la direction d'avancement du véhicule (10),
vérifier si les espaces libres (100) qui ont été déterminés conviennent comme emplacements de stationnement (110) pour le véhicule (10),
afficher une possibilité de stationnement transversal du véhicule (10) s'il est détecté qu'un espace libre (100) convient comme emplacement de stationnement (110) et fixer une limite arrière de stationnement (40) et une limite avant de stationnement (50),
saisir des signaux au moyen d'au moins un capteur (22) du véhicule (10) pour déterminer si des obstacles (200) sont présents dans la direction de déplacement du véhicule (10),
**caractérisé par** l'étape qui consiste à :
modifier la limite arrière de stationnement (40) en fonction des obstacles (200) dont la présence a été déterminée dans la direction de déplacement du véhicule (10), la limite de stationnement étant déplacée de la distance qui manque au véhicule (10) dans la direction de déplacement pour atteindre la limite avant de stationnement (50),
la modification de la limite arrière de stationnement (40) entraînant la fixation d'une nouvelle limite arrière de stationnement (40a) dont la distance par rapport à la limite arrière de stationnement (40) imposée est minimisée, les distances correspondantes ou la valeur du déplacement étant rapportées à la direction de déplacement du véhicule.

2. Procédé selon la revendication 1, **caractérisé en ce que** la modification de la limite arrière de stationnement (40) entraîne une augmentation de la distance entre cette dernière et la position du véhicule (10) au début de la manoeuvre de stationnement qui suit.

3. Procédé selon l'une des revendications précédentes, **caractérisé en ce que** la modification de la limite arrière de stationnement (40) correspond à la distance entre la limite avant de stationnement (50) et un obstacle (200) situé dans la direction de déplacement du véhicule (10) et détecté entre la limite avant de stationnement (50) et le véhicule (10).

4. Procédé selon l'une des revendications précédentes, **caractérisé en ce qu'**après la modification de la limite arrière de stationnement (40), la possibilité d'exécution de la manoeuvre de stationnement est affichée lorsqu'une distance prédéfinie entre le véhicule (10) et la limite arrière de stationnement (40) est atteinte.

5. Procédé selon l'une des revendications précédentes, **caractérisé en ce que** la modification de la limite arrière de stationnement (40) est inférieure ou égale à une modification maximale prédéterminée de la limite arrière de stationnement (40).

6. Procédé selon l'une des revendications précédentes, **caractérisé en ce qu'**après la détection de la présence d'un emplacement de stationnement (110) et la détection de la présence d'un obstacle (200) dans la direction de déplacement du véhicule (10), une position optimale du véhicule (10) est déterminée pour le début de l'exécution de la manoeuvre de stationnement.

7. Procédé selon la revendication 6, **caractérisé en ce que** la position optimale du véhicule (10) est basée sur une minimisation de la modification de la limite arrière de stationnement (40).

8. Procédé selon l'une des revendications précédentes, **caractérisé en ce qu'**une possibilité de stationnement est affichée à la condition qu'aucun obstacle (200) n'ait été détecté dans la direction de déplacement du véhicule (10) ou que l'obstacle (200) détecté dans la direction de déplacement du véhicule (10) conduise à une modification admissible de la limite arrière de stationnement (40).

9. Système d'assistance au conducteur d'un véhicule (10), présentant au moins un système (20) de capteurs doté d'au moins un capteur (22) et une unité de régulation (30) raccordée à ce capteur de manière à communiquer des signaux et conçue pour exécuter un procédé qui présente les caractéristiques d'une des revendications 1 à 8.

10. Véhicule (10) présentant un système d'assistance au conducteur doté d'au moins un système (20) de capteur présentant au moins un capteur (22) et une unité de régulation (30) raccordée à ce capteur de manière à communiquer des signaux et conçue pour exécuter un procédé qui présente les caractéristiques d'une des revendications 1 à 8.
